# EUROPEAN PATENT SPECIFICATION

(11) **EP 0 792 057 B1**
(45) Date of publication and mention of the grant of the patent: **15.01.2003**
(21) Application number: 96400376.8
(22) Date of filing: 23.02.1996
(51) Int. Cl.: H04M 3/30, H04M 1/57

(54) **Telephone ringback test device and method**
Fernsprechrückrufprüfgerät und Verfahren
Dispositif téléphonique de test par retour d'appel et méthode

(43) Date of publication of application: 27.08.1997
(73) Proprietor: HARRIS CORPORATION, Melbourne, FL 32919 (US)
(72) Inventor: Keefe, David W., Simi Valley, California 93065 (US); Barron, Joseph E., Newbury Park, California 91320 (US); Hearsey, Jeffrey W., Brooksville, Florida 34601 (US); Kennedy, Michael F., Ventura, California 93001 (US); Soto, Roy L., Moorpark, California 93021 (US)
(74) Representative: Kopacz, William James

(56) References cited:
- EP-A- 0 589 248
- WO-A-87/06421
- WO-A-95/07588
- DE-C- 3 512 787
- US-A- 4 764 949

## Description

The present invention is directed to methods and devices for testing telephone circuits, and in particular to a method and device for testing a public switched telephone network (PSTN) circuit in which a caller relies on caller identification (hereinafter "caller ID") information available through the telephone system to complete a ringback test to the caller.

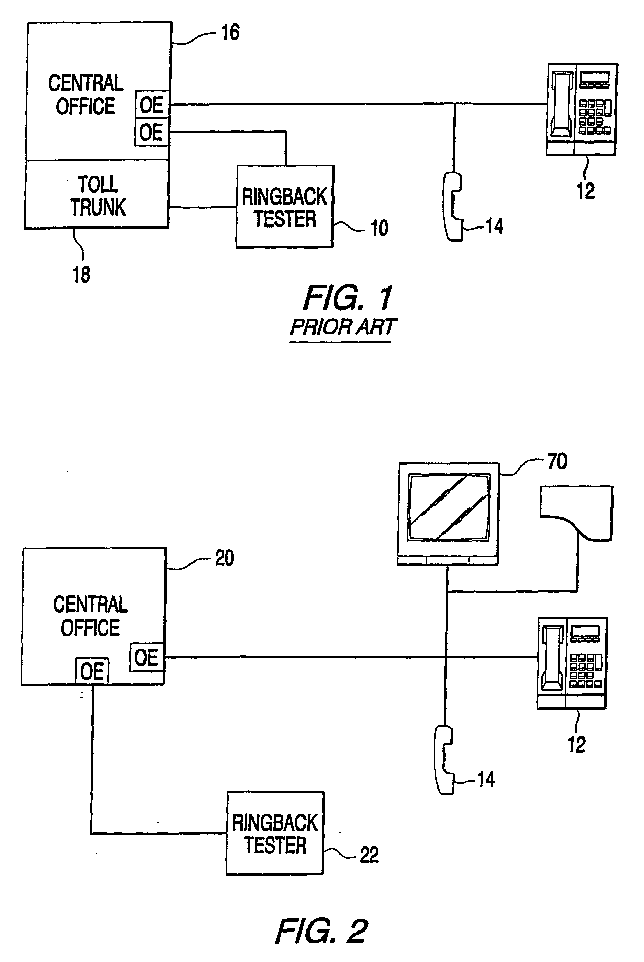

Figure 1 illustrates ringback testing devices 10 are known as means for testing a PSTN circuit. A subscriber or craftsperson (both are hereinafter referred to as a "caller") with telephone handset 12 or test set 14 may test the circuit by having the caller's telephone number called from another part of the circuit which is known as a ringback test. Ringback tests verify continuity and operation of dial-up lines between the telephone central office 16 and the caller 12 or 14. They provide a relatively complete test of a circuit from the caller's connection, through the PSTN circuit, including office equipment in the telephone central office 16 capable of providing telephone service ("OE" in the figures), and back to the caller's connection. Ringback tests may also be conducted of circuits in customer premises equipment (CPE) and references herein to tests of circuits in public switched telephone networks include tests of CPE circuits, and tests from one CPE to another CPE.

One ringback test device is disclosed in the specification of U.S. Patent No. 4,764,949. One of the problems solved by the device described therein is the method by which the caller's telephone number is obtained so that the ringback test may be completed. Callers, such as craftspersons working on a telephone line with a butt-in test set and telephone installers, may not know the telephone number associated with the particular wire on which they are working. The telephone number may be obtained when the caller calls a prescribed ringback access code that accesses the ringback test device 10 at the telephone central office. Upon receipt of the ringback access code, the device 10 signals a specialized trunk facility 18 within the telephone central office 16, known as a toll trunk or outgoing trunk circuit, causing it to transmit a message that identifies the caller's telephone number. The number is stored at the ringback test device 10 and the caller is thereafter instructed to disconnect from the circuit (go on hook). When the caller is disconnected the test device 10 sends a signal to the central station 16 instructing it to dial the stored telephone number. The test is successful if the caller's telephone rings. However, there are some problems with this method in that the use of toll trunks may be costly and the toll trunks may not always be available for testing. Further, the test unit is located at the central office, and thus is available only when the central office is equipped with the test device. It is desirable to have a portable ringback tester that can be used when a tester is not installed at the central office, or to avoid toll charges that may be associated with use of someone else's (e.g., the phone company) tester.

An object of the present invention is to provide a method and system for capturing a caller's telephone number for a ringback test, and to provide a novel method and system for using caller ID information to conduct tests of a circuit in a telephone network as set forth in claims 1 and 9 respectively.

There is also known from patent document WO-A-9507588 a detection system for component identifiers in a telecommunications system.

Caller ID is a service available to subscribers in telephone systems incorporating the out-of-band signaling system protocol Signal System 7 (SS7). The caller ID service in its current embodiment provides the caller's telephone number, time of call, caller's name, and-other information in a signal that is transmitted from the central office to a called subscriber during the three second silent interval between the first and second rings of the called subscriber's telephone. The caller ID information is transmitted conventionally through the telephone network in a standard serial binary format with an asynchronous frequency-shift keying (FSK) modem-like transmitter. With an appropriate receiver, the caller ID information may be displayed to the called subscriber so that the called subscriber may determine who is making the call before going off hook to answer the call. Subscribers may elect not to have their caller ID information transmitted by adding a privacy indicator (e.g., the letter "P") to the caller ID information, such as when a telephone number is "unlisted". If the caller ID information is not available, as when the caller ID service is not provided or when the caller is out-of-area (such as may be applicable to CPE caller ID systems), an out-of-area/unavailable indicator may be provided (e.g., the letter "O") instead of the caller ID information. Additional information about caller ID is available in Bellcore Technical Reference TR-TSY-000031, Issue 3, January 1990 (Bellcore, Morristown, NJ).

Another object is to provide a portable test device that takes advantage of caller ID services to conduct telephone network tests, including ringback tests, tests of caller ID features such as the privacy and out-of-area indications, and tests connections to other numbers.

A further object is to provide a telephone circuit test device in which caller ID information is provided to a visual display device for conducting telephone circuit tests.

The present invention includes a ringback testing device for testing a telephone network circuit by ringing a caller's telephone, comprising a receiver for detecting the caller's telephone number in caller ID information transmitted in a telephone network when a call is made from the caller's telephone, including a speech synthesizer for vocalizing the caller's telephone number obtained from the caller ID information so that a caller may hear the caller's telephone number.

The invention also includes a system for testing a telephone circuit comprising:
a telephone circuit to be tested, said circuit for providing caller ID information in a signal transmitted in said circuit when a caller is switched to said circuit;
a caller's telephone for being selectively switched to said circuit to be tested; and
a ringback testing device for being selectively switched to said circuit to be tested and for testing said telephone circuit by ringing said caller's telephone, said ringback testing device comprising,
   a receiver for detecting the caller's telephone number in the caller ID information,
   means for providing the detected telephone number to said caller's telephone, and
   means for automatically calling the detected telephone number after providing the detected telephone number and after said caller's telephone is indicated to be on hook.

The invention furthermore includes a method of testing a telephone circuit comprising the steps of:
(a) detecting caller ID information when a caller is switched to a testing device in the telephone circuit, the caller ID information including the caller's telephone number;
(b) storing the detected telephone number in the testing device;
(c) automatically calling the stored telephone number from the testing device when the caller goes on hook; and
(d) vocalizing the detected telephone number obtained from the caller ID information so that the caller may hear the detected telephone number.

The invention will now be described by way of example, with reference to the accompanying drawings in which:
Figure 1 is a pictorial depiction of a portion of typical telephone network with a ringback tester at the central office,
Figure 2 is a pictorial depiction of an embodiment of a telephone circuit with the ringback tester;
Figure 3 is a pictorial depiction of an embodiment of the ringback tester;
Figure 4 is a pictorial depiction of a ringback tester of the present invention installed in a central station equipment bay; and
Figure 5 is a pictorial depiction of a portable ringback tester.

Figure 2 illustrates an embodiment that may include a caller's telephone 12 or 14 connected to a telephone central office 20 through a telephone network, and a test device 22. The test device 22 may be installed in an equipment bay at a telephone central station, or may be portable and connected to the telephone network with a standard telephone connection. The test device 22 is assigned a telephone number so that it becomes a subscriber in the telephone network. In contrast to the prior art, the test device 22 need not access specialized trunk facilities in the central office, but instead takes advantage of the caller ID information available from the telephone system to obtain the caller's telephone number.

Operation of the device begins when a call is originated from the caller's telephone 12 or 14 to the telephone number assigned to the test device 22. When the call has been switched to the device 22, the device 22 detects the caller ID information that is currently being provided between the first and second rings. After the second ring the device 22 goes off hook to complete the connection to the caller's telephone. If the device 22 has detected the caller ID information, it stores the telephone number identified in the caller ID and provides the number to the caller, such as by using a voice synthesizer to "speak" the identified telephone number so that it may be heard by the caller. After transmission of the telephone number, the caller may be instructed to go on hook so that the device 22 can call the identified telephone number to perform a ringback test. The device 22 completes the call to the caller by automatically dialing the stored telephone number using the normal telephone network lines.

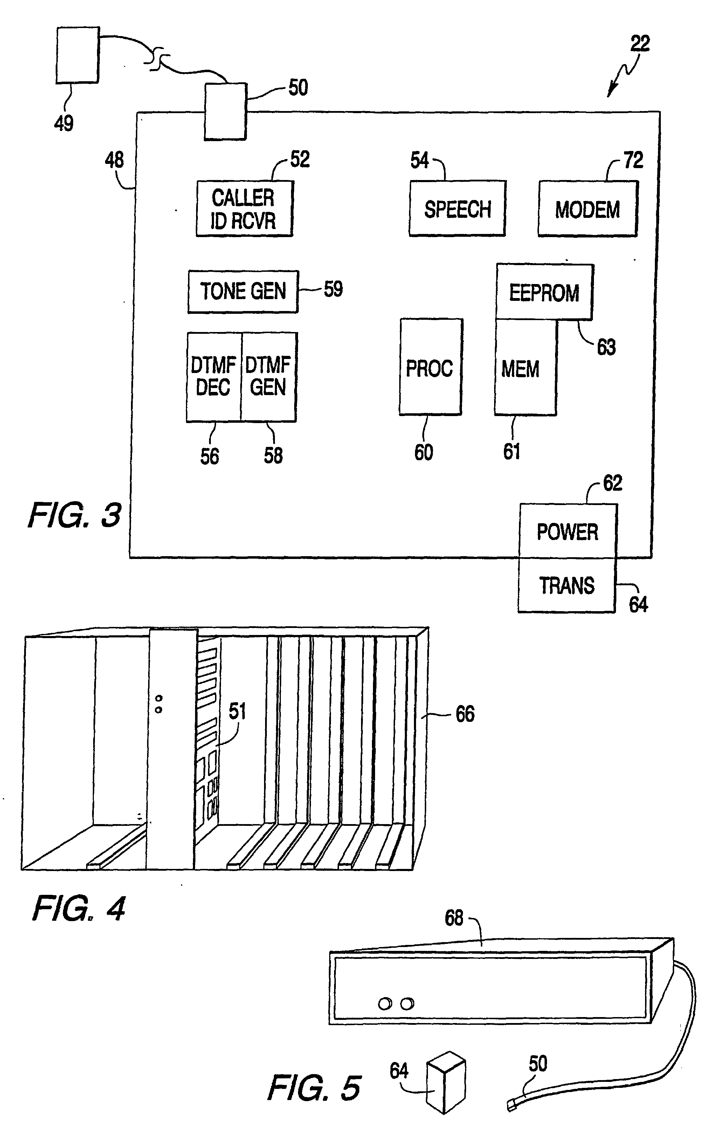

Figure 3 shows an embodiment of the test device 22 assembled in a single unit, such as printed circuit board (PCB) 48. The device 22 may be connected to a telephone network loop start POTS (plain old telephone service) line 49 configured to support caller ID; for the portable model a 2-wire interface 50, such as an RJ-11 phone jack, may be provided, and for the equipment bay installation, a PCB edge connector with pins for tip and ring, battery, and ground (51 in Figure 4) may be provided. The caller ID information may be detected with a caller ID receiver 52, such as the Bell 202, Bell 103, or Bell 212A. A digital speech synthesizer 54 may provide vocal instructions to a caller, and may include a speech library of numbers and words that may be retrieved and transmitted on command. For example, the library may include the numbers 0-9, and the words "enter", "password", "number", "phone", "hang", "up", "user", and "administrator", and the entries may be combined to form messages of appropriate length, for example up to 20 seconds. DTMF decoder 56 and DTMF generator 58 may be provided for conventional telephone functions. A tone generator 59 may also be provided to generate further specific tones that may be used by a craftsperson in conducting further tests (e.g., a 1200Hz "mark" tone and a 2200Hz "space" tone, although such tones need not be limited to the 4KHz voice band).

A processor 60 and memory 61 may be provided for control and storage. The memory 61 may store the telephone number and/or name identified in the caller ID information, and may also store other information from caller ID information that the caller may selectively retrieve. The memory 61 may also store numbers entered manually by the caller from the caller's telephone so it can call other telephone numbers at the discretion of the caller, or may be used in further tests.

A power receptacle 62 may be provided to receive power from the central office (nominally 48 volts dc), or from an external source (such as 110 volts ac) for which a transformer 64 may be used to convert the external power to an appropriate voltage, such as 9 volts dc. The device 22 may be carried in an equipment bay 66 at a central station such as illustrated in Figure 4, and to this end may be configured for slidable insertion. Alternatively, the device 22 may be in a container 68, such as illustrated in Figure 5, that may be portable and have standard connections to an available source of power (for example, standard house power, or a portable generator) and to a telephone network, such as with a hardwire or through mobile systems. The portable container 68 may be operated at a site where telephones are being installed.

In a further embodiment, the caller may be provided with a visual display device 70 (Figure 2), such as a video screen, printer, or data terminal, for viewing display-formatted caller ID information. The tester 22 may be provided with a data terminal, such as modem 72, for providing appropriately formatted caller ID information so that the caller's telephone number, name, etc. may be displayed instead of, or in addition to, being provided by the speech synthesizer 54. This capability may be particularly useful when a large number of ringback tests are being conducted and a record of such tests is desired. The tester 22 may also be adapted to provide a menu of tests that may be displayed and/or selected using display device 70.

A craftsperson using the test device 22 may perform a myriad of tests. As discussed above, the device will perform a ringback test without using special trunks. As is also apparent, it may be used to check caller ID by verifying that caller ID provides the correct telephone number (in the event the caller's telephone number is known), or to validate a craftperson's dispatch trouble ticket information relative to the subscriber's telephone number. The device can also be used to verify that caller ID is properly coded for unlisted telephone numbers. A craftsman may call the test device using an unlisted number and will not receive the unlisted telephone number if the caller ID information is coded correctly. For example, a spoken message may indicate that the caller ID is privacy coded. If the craftsperson thereafter wants to complete a ringback test of an unlisted number, the craftsperson may enter the unlisted number manually (the manually entered number may be stored in memory 61) and instruct the device to ring the number entered. Further, the device 22 may be used to verify that the caller is receiving caller ID information properly. The device may be instructed to provide tones (e.g., modem tones) that duplicate caller ID tones so that the craftsperson can perform tests on the caller's equipment to verify correct operation. The tests may also be conducted using the modem 72 and the display device 70.

In operation, access to the test device 22 may be limited by using a password. For example, when the device 22 is called, it may ask for a password such as by speaking "enter password". The caller may enter the password (e.g., a sequence of DTMF entries) for access to the device. The password may be stored in EEPROM memory 63 and retained in the event of power loss. Upon gaining access to the device, the device may speak the caller's telephone number. In the event, the caller ID information was not obtained (such as when caller ID service is not available or there has been a malfunction), the caller may be instructed to enter the caller's telephone number. Thereafter, the device 22 may recite a menu of further options for use by the craftsperson. For example, the device may offer a ringback test by pressing "1",a 1200Hz mark tone by pressing "2", a 2200Hz space tone by pressing "3", or a combination of mark and space tones by pressing "4". If the ringback option is selected, the device will instruct the caller to "hang up". After a predetermined period of time, five seconds for example, the device calls the stored number. If the number is busy, the device may wait a period of time, ten seconds for example, and call again. If the caller's telephone is not busy, the device may wait for a set number of rings or set period of time, five rings or 30 seconds for example, before ending its attempts to complete the ringback test. In a further option, the caller may manually enter a telephone number of another telephone for a ringback test of that telephone.

A device and method for testing a telephone circuit in which a caller takes advantage of available caller identification information to complete a ringback test, device is accessed by a caller who may not be aware of the telephone number from which he is calling when the caller completes a call to a telephone number assigned to the device. As the caller is accessing the test device, the test device detects the caller identification available between the first and second rings to identify the caller's telephone number, and answers the call after the second ring. The test device presents the telephone number to the caller. The caller ID information may be display-formatted at the test device and provide a visual display.

## Claims

1. A ringback testing device (22) for testing a telephone network circuit (49) by ringing a caller's telephone (12 OR 14) comprising a receiver for detecting the caller's telephone number in caller ID information transmitted in a telephone network when a call is made from the caller's telephone, a speech synthesizer (54) for vocalizing the caller's telephone number obtained from the caller ID information (52) **characterized in that** it further comprises means whereby a caller may hear the caller's telephone number, and a memory (61) for storing the caller's telephone number obtained from the caller ID information, said caller ID being obtained by means operative before said ringback testing device goes off hook and means for calling the stored telephone number after the caller goes on hoock to conduct a ringback test.

2. A device as claimed in claim 1 including a modem (72) for providing display-formatted caller ID information to the caller's telephone number for visual display (70).

3. A device (22) as claimed in claims 1 or 2, **characterized in that** it further comprises storage means (61) for storing the caller's telephone number obtained from the caller ID information (52);
means for instructing the caller to disconnect from the circuit when the caller's telephone number has been stored; and
means for automatically calling the stored telephone number from the device when the caller is disconnected from the circuit so that a ringback test to the caller's telephone number can be completed.

4. A device as claimed in claim 3 wherein said means for obtaining comprises the modem (72) receiver.

5. A device as claimed in claim 4 wherein said means for obtaining comprises means for obtaining a caller's name when available in caller ID information (52).

6. A device as claimed in claim 5 wherein said means for instructing further comprises means for providing a instructions that are formatted for visual display (70).

7. A device as claimed in claim 1 **characterized in that** it further comprises the autonomous device for extracting status information (52) from a ring signal which is for ringing the autonomous device, in which the ring signal includes status information (54), and the status information (54) includes a telephonic address for the loop subscriber source, including the specialized maintenance device rings the autonomous device and, after initially indicating an off-hook state, the autonomous device automatically rings the specialized maintenance device using extracted status information.

8. A method of testing a telephone network circuit (49) comprising the steps of:
(a) calling from a caller's telephone (12 or 14) in a telephone network a telephone number assigned to a test device (22) in the telephone network **characterized by** detecting at the test device the telephone (12 or 14) number in caller ID information (52) provided by the telephone network when the test device is switched to the caller's telephone and before said test device goes off hook;
(b) storing the detected telephone number at the test device;
(c) providing the detected telephone number to the caller;
(d) instructing the caller to go on hook when the detected telephone number has been stored; and
(e) calling the stored (61) telephone number from the test device.

9. A method as claimed in claim 8 wherein the caller's telephone is a craftspersons-test set, including the step of requiring the caller to provide a password before the step of providing the detected telephone number, in which the step of providing the detected telephone number to the caller is limited to caller's telephone numbers that are not privacy coded.

10. A method as claimed in claim 9 including the steps of manually entering a telephone number of a second (61) in the test device, and thereafter calling the stored second telephone number to conduct a ringback test of the second telephone, and further comprising the steps of detecting at the test device the name in the caller ID information (52), providing the detected name to the caller.

11. A method of testing a telephone circuit (49) in a telephone network as claimed in claim 8 comprising the steps of:
(a) detecting caller ID information (52) when a caller is switched to a testing device in the telephone circuit **characterized by** without the use of a toll trunk of the telephone network, the caller ID information including the caller's telephone number;
(b) storing (61) the detected telephone number in the testing device (22); and
(c) automatically calling the stored telephone number from the testing device when the caller goes on hook, including a speech synthesizer (54) for vocalizing the caller's telephone number obtained from the caller ID information (52) so that a caller may hear the caller's telephone number, and a memory (61) for storing the caller's telephone number obtained from the caller ID information, and means for calling the stored telephone number after the caller goes on hook to conduct a ringback test.

12. A method as claimed in claim 11 **characterized by** a modem (72) for providing display-formatted caller ID information (52) to the caller's telephone number for visual display (70), in which said receiver detects the caller's name in the caller ID information.

13. A method as claimed in claim 12 **characterized by** the step of vocalizing (54) the detected telephone number obtained from the caller ID information (52) so that the caller may hear the detected telephone number, and further comprising the step of selectively providing from the testing device one or both of mark and space tones for testing the caller's telephone.

## Patentansprüche

1. Rückruftestvorrichtung (22) zum Testen einer Telefonnetzwerkschaltung (49) dadurch, daß das Telefon (12 oder 14) eines Anrufers zum Ertönen eines Ruftons veranlaßt wird, umfassend einen Empfänger zur Feststellung der Telefonnummer des Anrufers in einer Anrufer-ID-Information, die in einem Telefonnetzwerk übertragen wird, wenn von dem Telefon des Anrufers ein Anruf erfolgt, einen Sprachsynthetisierer (54) zur Vokalisierung der Telefonnummer des Anrufers, die von der Anrufer-ID-Information (52) gewonnen wird, **dadurch gekennzeichnet, daß** sie ferner Mittel umfaßt, durch die ein Anrufer die Telefonnummer des Anrufers hören kann, und einen Speicher (61) zur Speicherung der Telefonnummer des Anrufers, die von der Anrufer-ID-Information gewonnen wird, wobei die Anrufer-ID durch Mittel gewonnen wird, die arbeiten, bevor die Rückruftestvorrichtung abhebt, und Mittel zum Anrufen der gespeicherten Telefonnummer, nachdem der Anrufer aufgelegt hat, um einen Rückruftest auszuführen.

2. Eine Vorrichtung wie in Anspruch 1 beansprucht, umfassend ein Modem (72) zur Lieferung einer zur Anzeige formatierten Anrufer-ID-Information an die Telefonnummer des Anrufers zur visuellen Anzeige (70).

3. Vorrichtung (22) wie in Anspruch 1 oder 2 beansprucht, **dadurch gekennzeichnet, daß** sie ferner umfaßt
Speichermittel (61) zur Speicherung der Telefonnummer des Anrufers, die von der Anrufer-ID-Information (52) gewonnen wird;
Mittel zur Instruierung des Anrufers, sich von der Schaltung zu trennen, wenn die Telefonnummer des Anrufers gespeichert wurde; und
Mittel zum automatischen Anrufen der gespeicherten Telefonnummer von der Vorrichtung wenn der Anrufer von der Schaltung getrennt ist, so daß ein Rückruftest zu der Telefonnummer des Anrufers vollendet werden kann.

4. Vorrichtung wie in Anspruch 3 beansprucht, bei der die Mittel zum Gewinnen den Modemempfänger (72) umfaßt.

5. Vorrichtung wie in Anspruch 4 beansprucht, bei der die Mittel zum Gewinnen Mittel zum Gewinnen des Namens eines Anrufers umfassen, wenn dieser in der Anrufer-ID-Information (52) zur Verfügung steht.

6. Vorrichtung nach Anspruch 5, bei der die Mittel zur Instruierung ferner Mittel umfassen zur Lieferung von Instruktionen, die für visuelle Anzeigen (70) formatiert sind.

7. Vorrichtung wie in Anspruch 1 beansprucht, **dadurch gekennzeichnet, daß** sie ferner die autonome Einrichtung zum Extrahieren von Statusinformation (52) von einem Ruftonsignal umfaßt, die zum Ertönen des Ruftons der autonomen Einrichtung dient, wobei das Ruftonsignal Statusinformation (54) enthält und die Statusinformation (54) eine telefonische Adresse für die Schleifenteilnehmernummer enthält, welche die spezialisierten Wartungseinrichtungsruftöne der autonomen Einrichtung enthält und, nach anfänglicher Angabe eines abgehobenen Zustands, die autonome Einrichtung automatisch die spezielle Wartungseinrichtung unter Verwendung der extrahierten Statusinformation ruft.

8. Verfahren des Testens einer Telefonnetzwerkschaltung (49), umfassend die Schritte:
(a) Anrufen vom Telefon (12 oder 14) eines Anrufers in einem Telefonnetzwerk der Telefonnummer, die einer Testvorrichtung (22) in dem Telefonnetzwerk zugewiesenen ist, **dadurch gekennzeichnet, daß** an der Testvorrichtung die Nummer des Telefons (12 oder 14) in Anrufer-ID-Information (52) erfaßt wird, welche von dem Telefonnetzwerk geliefert wird, wenn die Testvorrichtung mit dem Telefon des Anrufers verbunden wird, und bevor die Testvorrichtung abhebt;
(b) Speichern der ermittelten Telefonnummer an der Testvorrichtung;
(c) Liefern der ermittelten Telefonnummer an den Anrufer;
(d) Instruieren des Anrufers aufzulegen, wenn die ermittelte Telefonnummer gespeichert wurde; und
(e) Anrufen der gespeicherten (61) Telefonnummer von der Testvorrichtung.

9. Verfahren wie in Anspruch 8 beansprucht, bei dem das Telefon des Anrufers das Prüftelefon einer Wartungsperson ist, umfassend den Schritt der Aufforderung des Anrufers, ein Paßwort zu liefern, vor dem Schritt der Lieferung der ermittelten Telefonnummer, wobei der Schritt der Lieferung der ermittelten Telefonnummer an den Anrufer beschränkt ist auf Anrufertelefonnummern, die nicht als privat codiert sind.

10. Verfahren wie in Anspruch 9 beansprucht, umfassend die Schritte der manuellen Eingabe einer Telefonnummer einer zweiten (61) in der Testvorrichtung und danach Anrufen der gespeicherten zweiten Telefonnummer zur Durchführung eines Rückruftests der zweiten Telefonnummer, und ferner umfassend die Schritte der Ermittlung, an der Testvorrichtung, des Namens in der Anrufer-ID-Information (52) und Lieferung des ermittelten Namens an den Anrufer.

11. Verfahren des Testens einer Telefonschaltung (49) in einem Telefonnetzwerk wie in Anspruch 8 beansprucht, umfassend die Schritte:
(a) Ermitteln von Anrufer-ID-Information (52), wenn ein Anrufer mit einer Testvorrichtung in der Telefonschaltung verbunden ist, **gekennzeichnet durch** die folgenden Schritte, die ohne Verwendung einer gebührenpflichtigen Verbindungsleitung des Telefonnetzwerks ausgeführt werden, wobei die Anrufer-ID-Information die Telefonnummer des Anrufers beinhaltet;
(b) Speichern (61) der ermittelten Telefonnummer in der Testvorrichtung (22); und
(c) automatisches Anrufen der gespeicherten Telefonnummer von der Testvorrichtung, wenn der Anrufer auflegt, enthaltend einen Sprachsynthetisierer (54) zur Vokalisierung der Telefonnummer des Anrufers, die von der Anrufer-ID-Information (52) gewonnen wird, so daß ein Anrufer die Telefonnummer des Anrufers hören kann, einen Speicher (61) zur Speicherung der Telefonnummer des Anrufers, die von der Anrufer-ID-Information gewonnen wird, und Mittel zum Anrufen der gespeicherten Telefonnummer, nachdem der Anrufer aufgelegt hat, um einen Rückruftest auszuführen.

12. Verfahren wie in Anspruch 11 beansprucht, **gekennzeichnet durch** ein Modem (72) zur Lieferung einer zur Anzeige formatierten Anrufer-ID-Information (52) an die Telefonnummer des Anrufers zur visuellen Anzeige (70), wobei der Empfänger den Namen des Anrufers aus der Anrufer-ID-Information gewinnt.

13. Verfahren wie in Anspruch 12 beansprucht, **gekennzeichnet durch** den Schritt des Vokalisierens (54) der ermittelten Telefonnummer, die aus der Anrufer-ID-Information (52) gewonnen wird, so daß der Anrufer die ermittelte Telefonnummer hören kann, und ferner umfassend den Schritt der selektiven Lieferung von der Testvorrichtung eines oder beider von Zeichen- und Pausetönen zum Testen des Telefons des Anrufers.

## Revendications

1. Dispositif de test de rappel automatique (22) pour tester un circuit de réseau téléphonique (49) en faisant sonner le téléphone d'un appelant (12 ou 14), comprenant un récepteur pour détecter le numéro de téléphone de l'appelant dans les informations d'identification de l'appelant transmises dans un réseau téléphonique lorsqu'un appel est passé depuis le téléphone de l'appelant, un synthétiseur de parole (54) pour vocaliser le numéro de téléphone de l'appelant obtenu d'après les informations d'identification de l'appelant (52), **caractérisé en ce qu'**il comprend en outre des moyens grâce auxquels un appelant peut entendre le numéro de téléphone de l'appelant, et une mémoire (61) pour enregistrer le numéro de téléphone de l'appelant obtenu d'après les informations d'identification de l'appelant, ladite identification de l'appelant étant obtenue par des moyens qui fonctionnent avant que ledit dispositif de test de rappel automatique ne soit décroché et des moyens pour appeler le numéro de téléphone enregistré une fois que l'appelant a raccroché le combiné pour réaliser un test de rappel automatique.

2. Dispositif selon la revendication 1, comprenant un modem (72) pour fournir des informations d'identification de l'appelant formatées en mode affichage concernant le numéro de téléphone de l'appelant pour qu'il puisse être visualisé (70).

3. Dispositif (22) selon les revendications 1 ou 2, **caractérisé en ce qu'**il comprend en outre des moyens d'enregistrement (61) pour enregistrer le numéro de téléphone de l'appelant obtenu d'après les informations d'identification de l'appelant (52) ;
des moyens pour ordonner à l'appelant de se déconnecter du circuit lorsque le numéro de téléphone de l'appelant a été enregistré ; et
des moyens pour appeler automatiquement le numéro de téléphone enregistré depuis le dispositif lorsque l'appelant est déconnecté du circuit de manière à pouvoir réaliser un test de rappel automatique sur le numéro de téléphone de l'appelant.

4. Dispositif selon la revendication 3, dans lequel lesdits moyens d'obtention comprennent le récepteur qui est un modem (72).

5. Dispositif selon la revendication 4, dans lequel lesdits moyens d'obtention comprennent des moyens pour obtenir un nom d'appelant lorsqu'il est disponible dans les informations d'identification de l'appelant (52).

6. Dispositif selon la revendication 5, dans lequel lesdits moyens d'instruction comprennent en outre des moyens pour donner des instructions qui sont formatées afin de pouvoir être visualisées (70).

7. Dispositif selon la revendication 1, **caractérisé en ce qu'**il comprend en outre un dispositif autonome pour extraire des informations d'état (52) d'un signal de sonnerie qui est destiné à faire sonner le dispositif autonome, dans lequel le signal de sonnerie comprend des informations d'état (54), et les informations d'état (54) comprennent une adresse téléphonique pour la source d'abonnés en boucle, comprenant le dispositif de maintenance spécialisée qui fait sonner le dispositif autonome et, après avoir indiqué un état où le combiné est décroché, le dispositif autonome fait sonner automatiquement le dispositif de maintenance spécialisée en utilisant les informations d'état extraites.

8. Procédé pour tester un circuit de réseau téléphonique (9) comprenant les étapes consistant à :
(a) appeler depuis le téléphone d'un appelant (12 ou 14) dans un réseau téléphonique un numéro de téléphone affecté à un dispositif de test (22) dans le réseau téléphonique, **caractérisé en ce qu'**on détecte, au niveau du dispositif de test, le numéro de téléphone (12 ou 14) dans les informations d'identification de l'appelant (52) fournies par le réseau téléphonique lorsque le dispositif de test est commuté sur le téléphone de l'appelant et avant que ledit dispositif de test ne soit décroché (1) ;
(b) enregistrer le numéro de téléphone détecté au niveau du dispositif de test ;
(c) fournir le numéro de téléphone détecté à l'appelant ;
(d) ordonner à l'appelant de raccrocher le combiné lorsque le numéro de téléphone détecté a été enregistré ; et
(e) appeler le numéro de téléphone enregistré (61) depuis le dispositif de test.

9. Procédé selon la revendication 8, dans lequel le téléphone de l'appelant est un système de test de technicien, comprenant l'étape consistant à demander à l'utilisateur de fournir un mot de passe avant de fournir le numéro de téléphone détecté, dans lequel l'étape consistant à fournir le numéro de téléphone détecté à l'appelant se limite aux numéros de téléphone d'appelant qui ne font pas l'objet d'un codage de confidentialité.

10. Procédé selon la revendication 9, comprenant les étapes consistant à saisir manuellement un numéro de téléphone d'un second appelant (61) dans le dispositif de test, puis à appeler le second numéro de téléphone enregistré pour réaliser un test de rappel automatique du second téléphone, et comprenant en outre les étapes consistant à détecter au niveau du dispositif de test le nom figurant dans les informations d'identification de l'appelant (52), ce qui fournit le nom détecté à l'appelant.

11. Procédé pour tester un circuit téléphonique (49) dans un réseau téléphonique selon la revendication 8, comprenant les étapes consistant à :
(a) détecter les informations d'identification de l'appelant (52) quand un appelant est commuté sur un dispositif de test dans le circuit téléphonique, **caractérisé par** les informations d'identification de l'appelant comprenant le numéro de téléphone de l'appelant sans utiliser une ligne interurbaine du réseau téléphonique ;
(b) enregistrer (61) le numéro de téléphone détecté dans le dispositif de test (22) ; et
(c) appeler automatiquement le numéro de téléphone enregistré depuis le dispositif de test lorsque l'appelant raccroche le combiné, comprenant un synthétiseur de parole (54) pour vocaliser le numéro de téléphone de l'appelant obtenu d'après les informations d'identification de l'appelant (52) de telle sorte qu'un appelant peut entendre le numéro de téléphone de l'appelant, et une mémoire (61) pour enregistrer le numéro de téléphone de l'appelant obtenu d'après les informations d'identification de l'appelant, et des moyens pour appeler le numéro de téléphone enregistré une fois que l'appelant a raccroché le combiné pour réaliser un test de rappel automatique.

12. Procédé selon la revendication 11, **caractérisé par** un modem (72) destiné à fournir des informations d'identification de l'appelant formatées en mode affichage concernant le numéro de téléphone de l'appelant pour qu'il puisse être visualisé (70), dans lequel ledit récepteur détecte le nom de l'appelant dans les informations d'identification de l'appelant.

13. Procédé selon la revendication 12, **caractérisé par** l'étape consistant à vocaliser (54) le numéro de téléphone détecté obtenu d'après les informations d'identification de l'appelant (52) de telle sorte que l'appelant peut entendre le numéro de téléphone détecté, et comprenant en outre l'étape consistant à fournir de manière sélective depuis le dispositif de test des tonalités travail-repos pour tester le téléphone de l'appelant.
